# EUROPEAN PATENT APPLICATION

(11) **EP 4 711 218 A1**
(43) Date of publication of application: **18.03.2026**
(21) Application number: 24199626.3
(22) Date of filing: 11.09.2024
(51) Int. Cl.: B60T 8/88, B60T 17/22

(54) **CONTROL AND MONITORING DEVICE FOR AN ELECTRONIC BRAKE SYSTEM, ELECTRONIC BRAKE SYSTEM FOR A VEHICLE AND VEHICLE**

(71) Applicant: KB Intellectual Property GmbH & Co. KG, 82049 Pullach (DE)
(72) Inventor: SZABO, Gergely, 1125 Budapest (HU); KOKREHEL, Csaba, 1119 Budapest (HU)

(57) **Abstract**

The present invention relates to a control and monitoring device (10) for an electronic brake system, comprising:
a bridge circuit (3) comprising at least four switching members (31a, 31b, 31c, 31d) in a H-bridge configuration to switch a state of a brake actuator assembly (100),
a bridge circuit driver (2) connected to the bridge circuit (3) and configured to control the bridge circuit (3), and
at least one of a monitoring circuit (4) and a current detection device (5) configured to detect at least one of a current and a voltage to be controlled by the control and monitoring device (10).

## Description

The present invention relates to a control and monitoring device for an electronic brake system, an electronic brake system for a vehicle comprising such control and monitoring system and a respective vehicle.

In brake systems, for example a brake system providing a parking brake solution, a control and monitoring of the brake system requires a high level of safety, e.g. ASIL D representing a safety integrity level in automotive industry. Specifically with respect to fully electronic brake systems, already available, mainly pneumatic-based solutions cannot be implemented due to a missing fluid, specifically compressed air as used in pneumatic solutions. In other words, electronic brake systems do not rely on any fluids such as pneumatic brake systems. Accordingly, any solution adapted to pneumatic or hydraulic brake systems are not applicable.

It is an object of the present invention to allow a control and monitoring of an electronic brake system with a high safety integrity level.

The object is solved by the subject-matter of the independent claims. Further aspects of the present invention are subject to the dependent claims.

According to the present invention, a control and monitoring device for an electronic brake system comprises a bridge circuit comprising at least four switching members in a H-bridge configuration to switch a state of a brake actuator assembly, a bridge circuit driver connected to the bridge circuit and configured to control the bridge circuit, and at least one of a monitoring unit and a current detection device configured to detect at least one of a voltage and a current to be controlled by the control and monitoring circuit.

By use of such H-bridge configuration, which is also known as full bridge configuration, switching a state of a brake actuator assembly such as a bistable brake actuator assembly may be controlled by providing opposite sign excitation or voltage, respectively, to a brake actuator assembly control or directly to an actuating member of the brake actuator assembly. Accordingly, by control of the H-bridge configuration, an actuating member of the brake actuator assembly may be moved into at least one stable state, particularly in one of the stable state of a bistable brake actuator assembly.

For not only providing controlling but also monitoring functions, the control and monitoring device comprises the monitoring unit and/or the current detection device configured to detect current and/or a voltage to be controlled by the control and monitoring device. Accordingly, the monitoring unit is configured to detect a voltage within the control and monitoring device, preferably an output voltage to be provided to the brake actuator assembly, and the current detection device is configured to detect a current. The detected voltage and/or current may be used for monitoring the functionality of the control and monitoring device as such and/or the brake actuator assembly connected thereto.

For example, the monitoring unit may detect a voltage indicative for an undervoltage of being not suitable to control or operate the brake actuator assembly. Alternatively or in addition the monitoring unit may detect a voltage indicative for an overvoltage that may damage the brake actuator assembly or a component of the control and monitoring device. Similarly, the current detection device may detect a current indicative for an undercurrent or overcurrent. The detected voltage and/or current may also be indicative for any brake actuator assembly not connected to the control and monitoring device at all.

In some embodiments, the control and monitoring device further comprises a control device, preferably a microcontroller, connected to the bridge circuit driver by a signal interface and configured to at least control the bridge circuit driver.

The control device is connected to the bridge circuit driver to at least control the bridge circuit driver, for example, based on actual input commands and/or operating conditions. However, any function described with respect to the control device may, alternatively or additionally, be implemented in the bridge circuit driver by a respective processor or the like to also function as a respective control device. In turn, the bridge circuit driver may be comprised by the control unit or the respective functions of the bridge circuit driver are integrated into the control device, respectively.

Preferably, the control device is configured to determine on actual commands and/or conditions, whether a brake actuator of a brake actuator assembly such as a bistable parking brake actuator assembly shall be moved from one stable state to the other stable state. The control device may also receive the measured voltages of the brake actuator assembly.

In some embodiments, the current detection device is connected to the bridge circuit, preferably between two low-side switching members, and to at least one of the bridge circuit driver and the control device.

The current detection device may comprise a resistor and the detected resistance representative of an actual current, for example, between two switching members of the bridge circuit connected in parallel is transferred to the bridge circuit driver or the control device to monitor the bridge circuit and/or the brake actuator assembly connected thereto.

In some embodiments, the monitoring circuit comprises at least one detection member, preferably a resistor member, connected to a switching line to provide switching signals of the bridge circuit and at least one of the bridge circuit driver and the control device, and configured to detect a voltage between the switching line and at least one of the bridge circuit driver and the control device.

Preferably, the monitoring circuit comprises three resistors wherein two of them act as a voltage divider. The third resistor is used as a current limiter towards the microcontroller. The current measurement device measures the current, the resistros measure the voltages. With the combination of these, failure events can be determined.

More preferably, two monitoring circuits are provided, one for each bridge circuit, respectively.

In some embodiments, the monitoring circuit is configured to detect a voltage for different phases.

Accordingly, the monitoring circuit is configured to detect the voltage of different phases applied to the brake actuator assembly to allow control of each of the phases or at least some of the phases.

In some embodiments, at least one of the bridge circuit driver and the control device is configured to compare the detected voltage with a reference voltage.

The comparison of the detected voltage with respect to the reference voltage may be based on a reference voltage value stored in a respective memory of at least one of the bridge circuit driver or the control device. The respective memory may provide one reference voltage or different reference voltages that may be selected according to different operating conditions and/or with respect to a concrete type of voltage to be monitored. Alternatively or in addition, at least one of the bridge circuit driver and the control device are configured to calculate a respective actual reference voltage.

Preferably, the reference voltage is determined as follows: a bistable solenoid is operated in current control mode. When the brake actuator assembly is opened, the driver software logic requests the appropriate current to actuate it. The actual current is measured with the current measurement device and the reference is known as described before. Thereafter, an error value is calculated as the difference of the reference current and the actual measured current. This error signal is fed into a current controller, that provides the reference voltage. That reference voltage is directed to the gate driver that enforces this reference. The same happens in closing direction, but with inverse reference current.

In some embodiments, at least one of the switching members is or comprises a MOSFET.

In this context, the bridge circuit driver and/or the control device may be configured to monitor the physical properties of the MOSFET or another type of switching member to detect an overload to protect the switching members from damages.

Using the voltage and current measurement it can be monitored whether the requested current is achieved on the output or not. If not, the type of the failure can be determined. If the measured current hits the error limit, there are two failure options. In option A the bridge and its MOSFETs are damaged. Then, it can be decided that using the gate driver, because in those cases the drain source voltage will be too high due to internal MOSFET error, or too low due to burnt out MOSFETs.

If the MOSFETs are okay, but there is still the overcurrent issue, then the solenoid went into short circuit. If the MOSFETs are okay, but at any requested current there is no measured current, then the solenoid is disconnected from the driver circuit.

In a further aspect, the present invention relates to an electronic brake system for a vehicle. The electronic brake system comprises a brake actuator assembly, and a control and monitoring device as previously described. The control and monitoring device is configured to control and monitor at least one of the brake actuator assembly and a functionality of the control and monitoring device.

As previously described, the control and monitoring device may be configured to detect at least one of a voltage and current. The voltage and/or current may be representative of at least one of a functional state of the control and monitoring as such and a brake actuator assembly connected thereto. In addition to monitoring the at least one of a functional state of the control and monitoring as such and a brake actuator assembly connected thereto, the control and monitoring device, specifically at least one of the bridge circuit driver and the control device is configured to control the bridge circuit accordingly. The respective control of the bridge circuit may also result in a respective control of the brake actuator assembly.

In some embodiments, the brake actuator assembly is a bistable clutch assembly.

In principle, the term "bistable" relates to an actuator having two stable points, i.e. two stable positions or positional states, wherein the actuator can be kept in the two stable points without applying any external electrical energy or excitation, respectively.

For example, the bistable clutch assembly is a clutch assembly to provide one stable state of a disengagement state of the clutch assembly, while the other stable state is an engagement state of the clutch assembly.

The clutch assembly may comprise a bistable solenoid unit for actuating a biased locking member such as a lever with a locking portion to be moved into a locking position to engage with an engagement member of a ratchet or gear wheel for an engagement state. The engagement state is maintained by the engagement member engaging the locking portion. In turn, the disengagement state may be achieved by disengagement of the engagement member in a non-excited state of the solenoid unit, wherein the biasing force on the locking member forces the locking member to move into a position not providing any engagement of the engagement member with the locking portion.

The control and monitoring device is connected to the clutch assembly to control and monitor at least one of the solenoid unit and the control of the solenoid unit. Specifically, the clutch assembly is controlled by the bridge circuit controlled by at least one of the bridge circuit driver and the control device. In accordance with the previously described ability of the control and monitoring device, the detection and processing of at least one of a physical property of the switching members, a voltage and a current allows the monitoring requested for safety reasons as well as an adapted control in response in the event of any detected fault.

In some embodiments, the brake actuator assembly is a bistable clutch assembly of a parking brake.

Specifically with respect to fully electronic brake systems, safe operation and a respective monitoring of a parking brake is requested to be achieved. Since the parking brake is used to lock a vehicle in standstill, particularly leaving the vehicle in such state without any person being around, safe operation of the parking brake is critical. Accordingly, the control and monitoring device for a bistable clutch assembly of a parking brake may be configured to monitor at least one of the control and monitoring device as such, here as a parking brake driver circuit, and the parking brake represented by the bistable clutch. With respect to monitor the parking brake, it may be monitored whether parking brake reached its locking state when locking was requested or released state whether release was requested. The monitoring routine may also detect whether the parking brake is mechanically stuck, or its friction is beyond acceptable limits, or its cables are disconnected from the control and monitoring device.

Any features or functionalities relating to the electronic brake system or the brake actuator assembly, respectively, described with respect to the control and monitoring device are also applicable to the electronic brake system or the brake actuator assembly, respectively. In turn, any features or functionalities relating to the control and monitoring device described with respect to the electronic brake system or the brake actuator assembly, respectively, are also applicable to the control and monitoring device.

In a further aspect, the present invention relates to a vehicle. The vehicle comprises at least one control and monitoring device as previously described and/or an electronic brake system as previously described. The vehicle is preferably a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described electro-mechanical actuator assembly and/or brake assembly.

Any features or functionalities relating to vehicle described with respect to the control and monitoring device, the electronic brake system or the brake actuator assembly, respectively, are also applicable to the vehicle. In turn, any features or functionalities relating to the control and monitoring device, the electronic brake system or the brake actuator assembly, respectively, described with respect to the vehicle are also applicable to the control and monitoring device, the electronic brake system or the brake actuator assembly, respectively.

Further advantages, aspects and details of the invention are subject to the claims, the following description of exemplary embodiments applying the principles of the invention, and the respective exemplary drawings.
Fig. 1 is a schematic representation of an exemplary clutch assembly the present invention is applicable to in a disengagement state;
Fig. 2 is a schematic representation of the exemplary clutch assembly of Fig. 1 in an engagement state; and
Fig. 3 is a schematic representation of a control and monitoring device as an exemplary embodiment of the present invention.

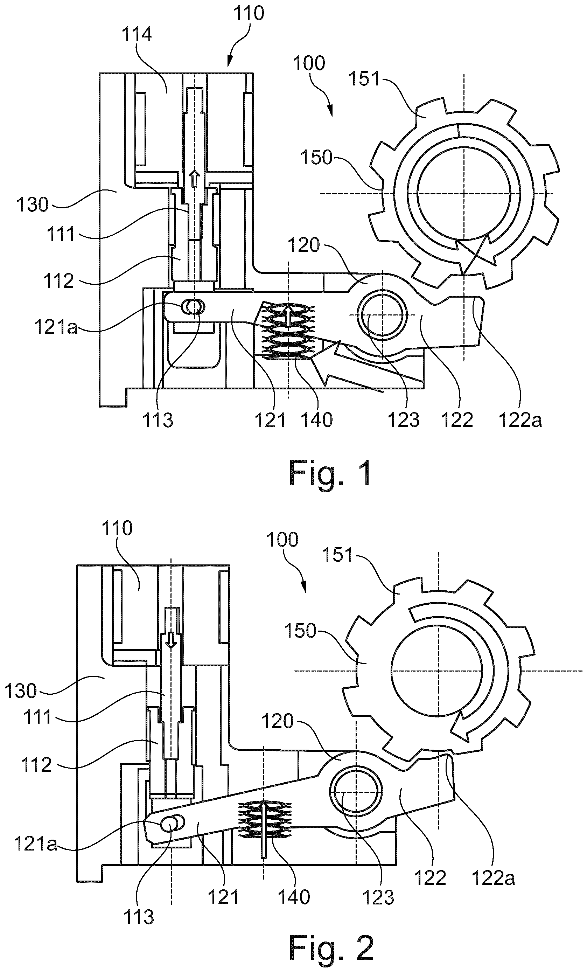

Fig. 1 shows an exemplary clutch assembly 100 the present invention is applicable to in a disengagement state. The clutch assembly 100 is a bistable clutch assembly representative of a brake actuator assembly of an electronic brake system, here a parking brake system.

The clutch assembly 100 comprises a solenoid unit 110 and a locking member 120 accommodated in a housing 130. The clutch assembly 100 further comprises a ratchet wheel 150 a rotation of which in at least one rotational direction can be locked by the locking member 120. Locking of the ratchet wheel 150 results in locking of the parking brake in a brake position.

As per Fig. 1, the locking member 120 is in a disengaging position with respect to the ratchet wheel 150 to allow the ratchet wheel to freely rotate clockwise and counterclockwise. In the exemplary embodiment, the locking member 120 is a lever rotatable about a pivot 123. The locking member 120 comprises an actuated portion 121 as a portion of the lever extending from the pivot 123 in one direction and a locking portion 122 as a portion of the lever extending from the pivot in the opposite direction with respect to the actuated portion 121. The locking portion 122 comprises a locking structure 122a configured to engage with a tooth-like engagement member 151 of the ratchet wheel 150 in an engagement position of the locking member 120 as described later. Further, the locking member 120 is biased in the disengagement position by a spring member acting on the actuated portion 121.

For actuating the actuated portion 121 to be moved against the biasing force of the spring member 140, the actuated portion comprises a connecting structure 121a, here an elongated through hole to connect to a connecting member 113 of the solenoid unit 110. The solenoid unit 110 comprises an electromagnet 114 with a solenoid actuator 111 as a plunger guided within the electromagnet 114. The solenoid actuator 111 is connected to the connecting member 113 via a transfer member 112. The transfer member 112 may be understood as a prolongation of the solenoid actuator 111. Here, the transfer member 112 is additionally configured to provide an abutment with the electromagnet to restrict a movement of the transfer member 112 and the solenoid actuator 111, respectively, in a direction away from an actuating direction of the actuated portion 121. In a non-excited state of the electromagnet 114 or the solenoid unit 110, respectively, the solenoid actuator 111 does not exert any force on the actuated portion 121 exceeding the biasing force of the spring member 140. Accordingly, without any excitation of the solenoid unit, the locking member 120 remains in its disengaging position or state, respectively.

Fig. 2 shows a schematic representation of the exemplary clutch assembly 100 of Fig. 1 in an engagement state. To achieve the engagement state, the electromagnet 5 is excited to move the solenoid actuator 111 together with the transfer member 112 in a direction against the direction of the biasing force of the spring member 140, here in a downward direction with the biasing force of the spring member acting in the upward direction. Due to the movement of the of the solenoid actuator 111 the actuated portion 121 is moved in the same direction causing the locking member 120 to rotate counterclockwise around the pivot 123. Accordingly, the locking portion 122 is moved in a direction towards the ratchet wheel 150 to allow the locking structure 122a to engage with one of the tooth-like engagement members 150 of the ratchet wheel 150.

In the exemplary embodiment, the locking structure is not only configured to allow one of the engagement members 150 to engage the locking structure but the locking structure is also configured to engage a space between two subsequent engaging members 151. Such engagement of the locking structure 122a between two subsequent engaging members 151 blocks the ratchet wheel from any further rotation in one direction, here a clockwise rotation. However, due to the ratchet wheel 150 or the engaging members 151 are configured to provide a ratchet together with the locking structure 122a and the spring member 140 allows rotation in the counterclockwise direction.

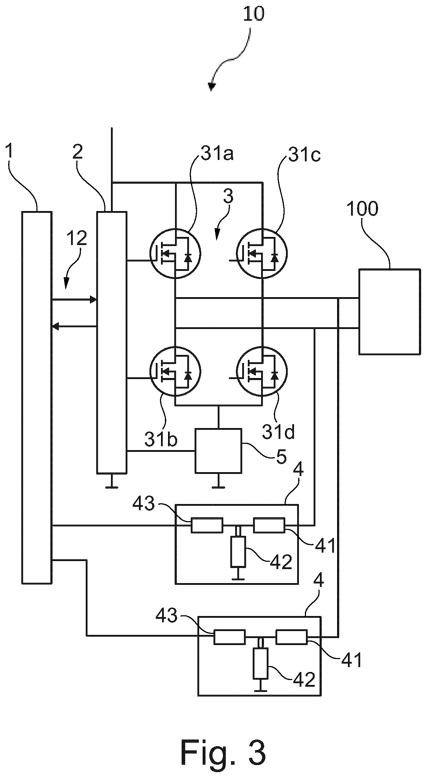

Fig. 3 shows a schematic representation of a control and monitoring device 10 as an exemplary embodiment of the present invention.

The control and monitoring device comprises a control device 1, a bridge circuit driver 2, a bridge circuit 3 comprising four MOSFETs as switching members 31a, 31b, 31c, 31d in a H bridge configuration, a monitoring circuit 4 and a current detection device 5. The control device 1 and the bridge circuit driver communicate with each other via a signal interface 12, here a digital interface. The bridge circuit 3 is connected with connecting lines to the clutch assembly 100 representative of a brake actuator assembly. Each of the connecting lines is connected to the monitoring circuit 4 which is connected to the control device 1. The current detection device 5 is connected to a parallel connection of the switching members 31b and 31d. The current detection device 5 is further connected to the bridge circuit driver 2.

According to the exemplary embodiment, the control device 1 is a microcontroller configured to decide on actual requests and operating conditions, whether the clutch assembly 100 shall be moved from one of its stable states to the other. The control device 1 also receives measured phase voltages of the clutch by the monitoring circuit 4. According to Fig. 3, the monitoring circuit 4 comprises two sets of T-shaped resistor nets, each comprising resistors 41, 42, 43, respectively. Two of the resistors 41, 42 act as a voltage divider. The third resistor 43 is used as a current limiter towards the microcontroller 1. The current measurement device measures the current, the resistors measure the voltages. With the combination of these, failure events can be determined.

In such configuration, the control device 1 comprises a safety detection routing to monitor, whether an output voltage of each phase of the clutch assembly 100 is within an acceptable range compared to a reference voltage calculated by the control device 1.

The bridge circuit driver 2 receives control signals from the control device 1 and operates the bridge circuit 3 accordingly. The bridge circuit driver 2 operates the bridge circuit 3 by further considering the physical limits and operation of the switching members 31a, 31b, 31c, 31d. The limits and parameters are set by the control device 1. The bridge driver circuit is further configured to detect several fault events. In the exemplary embodiment, one fault event is a driver supply line undervoltage error representing a driver supply line voltage being too low to operate the clutch assembly 100. Another fault event is a driver supply line overvoltage error representing a driver supply line voltage being too high and may therefore cause damaging the clutch assembly 100 or the bridge circuit driver 2 as such. The bridge circuit driver further comprises a switching member related protection. Accordingly, the bridge circuit driver 2 is aware of the physical properties of the switching members 31a, 31b, 31c, 31d and can report whether the switching members 31a, 31b, 31c, 31d are overloaded or not. By such protection, the switching members 31a, 31b, 31c, 31d can be protected from fatal damages. The bridge circuit driver 2 is also configured to detect, whether the clutch assembly 100 is disconnected from the output stage and can therefore not be operated.

The control of the bridge circuit 3 in a H bridge configuration of the switching members 31a, 31b, 31c, 31d by the control device 1 and the bridge circuit driver 2, respectively, allows opposite sign excitation or voltage, respectively, to be supplied to the clutch assembly 100. Accordingly, the clutch assembly 100 can be switched between its stable states.

The invention has been described with respect to exemplary embodiments. However, the invention is not limited to the exemplary embodiments. Even though the above description relates to a bistable clutch assembly, it is noted that the present invention is also applicable to any other type of brake actuator assembly. Accordingly, the bistable clutch assembly is simply a synonym for a brake actuator assembly, specifically a bistable brake actuator assembly. Further, any or some functionality of the bridge circuit driver may be implemented into the control device, and vice versa. For example, the control device may be configured as to provide the functionalities of the bridge circuit driver or may comprise the bridge circuit driver.

### LIST OF REFERENCE SIGNS

- 1: control device
- 2: bridge circuit driver
- 3: bridge circuit
- 4: monitoring circuit
- 5: current detection device
- 10: control and monitoring system
- 12: signal interface
- 31a, 31c: switching member
- 31b, 31d: switching member
- 41: resistor member
- 42: resistor member
- 43: resistor member
- 100: clutch assembly (brake actuator assembly)
- 110: solenoid unit
- 111: solenoid actuator
- 112: transfer member
- 113: connecting member
- 114: electromagnet
- 120: locking member
- 121: actuated portion
- 121a: connecting structure
- 122: locking portion
- 122a: locking structure
- 123: pivot
- 130: housing
- 140: spring member
- 150: ratchet wheel
- 151: engagement member

## Claims

1. Control and monitoring device (10) for an electronic brake system, comprising:
a bridge circuit (3) comprising at least four switching members (31a, 31b, 31c, 31d) in a H-bridge configuration to switch a state of a brake actuator assembly (100),
a bridge circuit driver (2) connected to the bridge circuit (3) and configured to control the bridge circuit (3), and
at least one of a monitoring unit (4) and a current detection device (5) configured to detect at least one of a voltage and a current to be controlled by the control and monitoring device (10).

2. Control and monitoring device (10) according to claim 1, wherein the control and monitoring device (10) further comprises a control device (1), preferably a microcontroller, connected to the bridge circuit driver (2) by a signal interface (12) and configured to at least control the bridge circuit driver (2).

3. Control and monitoring device (10) according to claim 1 or 2, wherein the current detection device (5) is connected to the bridge circuit (3), preferably between two low-side switching members (31b, 31d), and to at least one of the bridge circuit driver (2) and the control device (1).

4. Control and monitoring device (10) according to any one of the preceding claims, wherein the monitoring circuit (4) comprises at least one detection member (42), preferably a resistor member, connected to a switching line to provide switching signals of the bridge circuit (3) and at least one of the bridge circuit driver (2) and the control device (1), and configured to detect a voltage between the switching line and at least one of the bridge circuit driver (2) and the control device (1).

5. Control and monitoring device (10) according to any one of the preceding claims, wherein the monitoring circuit (4) comprises two sets of T-shaped resistor nets, each comprising resistors (41, 42, 43), respectively, wherein two of the resistors (41, 42) are configured to act as a voltage divider, and the third resistor (43) is configured to act as a current limiter towards the control device (1), being configured to detect a drive status of the bridge circuit driver (2).

6. Control and monitoring device (10) according to claim 4 or 5, wherein the monitoring circuit (4) is configured to detect a voltage for different phases.

7. Control and monitoring device (10) according to any one of the claims 4 to 6, wherein at least one of the bridge circuit driver (2) and the control device (1) is configured to compare the detected voltage with a reference voltage.

8. Control and monitoring device (10) according to any one of the preceding claims, wherein at least one of the switching members (31a, 31b, 31c, 31d) is or comprises a MOSFET.

9. Electronic brake system for a vehicle, comprising:
a brake actuator assembly (100), and
a control and monitoring device (10) according to any one of the preceding claims, wherein
the control and monitoring device (10) is configured to control and monitor at least one of the brake actuator assembly (100) and a functionality of the control and monitoring device (10).

10. Electronic brake system according to claim 9, wherein the brake actuator assembly is a bistable clutch assembly.

11. Electronic brake system according to claim 10, wherein the brake actuator assembly (100) is a bistable clutch assembly of a parking brake.

12. Vehicle comprising at least one control and monitoring device (10) according to any one of the claims 1 to 8 and/or an electronic brake system according to any one of the claims 9 to 11, wherein the vehicle is preferably a commercial vehicle and/or an electrically powered or hybrid vehicle.
